# EUROPEAN PATENT SPECIFICATION

(11) **EP 2 372 400 B1**
(45) Date of publication and mention of the grant of the patent: **09.01.2013**
(21) Application number: 11159326.5
(22) Date of filing: 23.03.2011
(51) Int. Cl.: G01V 1/36

(54) **Method of imaging the earth's subsurface during marine seismic data acquisition**
Verfahren zur Abbildung des Erduntergrundes während mariner seismischer Datenerfassung
Procédé d'imagerie sous-marine de la terre durant l'acquisition de données sismiques marines

(30) Priority: 24.03.2010 US 661785
(43) Date of publication of application: 05.10.2011
(73) Proprietor: PGS Geophysical AS, 1366 Lysaker (NO)
(72) Inventor: Brittan, John, Weybridge, Surrey KT13 8SQ (GB); Bishop, Steven David, Farnham, Surrey GU10 1LA (GB); Brandsberg-Dahl, Sverre, Houston, TX 77007 (US)
(74) Representative: Lord, Michael

(56) References cited:
- GB-A- 2 432 936

## Description

### Field of the Invention

This invention relates generally to the field of geophysical prospecting. More particularly, the invention relates to the field of imaging marine seismic data.

### Description of the Related Art

In the oil and gas industry, geophysical prospecting is commonly used to aid in the search for and evaluation of subsurface earth formations. Geophysical prospecting techniques yield knowledge of the subsurface structure of the earth, which is useful for finding and extracting valuable mineral resources, particularly hydrocarbon deposits such as oil and natural gas. A well-known technique of geophysical prospecting is a seismic survey. In a land-based seismic survey, a seismic signal is generated on or near the earth's surface and then travels downward into the subsurface of the earth. In a marine seismic survey, the seismic signal may also travel downward through a body of water overlying the subsurface of the earth. Seismic energy sources are used to generate the seismic signal which, after propagating into the earth, is at least partially reflected by subsurface seismic reflectors. Such seismic reflectors typically are interfaces between subterranean formations having different elastic properties, specifically sound wave velocity and rock density, which lead to differences in acoustic impedance at the interfaces. The reflected seismic energy is detected by seismic sensors (also called seismic receivers) at or near the surface of the earth, in an overlying body of water, or at known depths in boreholes. The seismic sensors generate signals, typically electrical or optical, from the detected seismic energy, which are recorded for further processing.

The resulting seismic data obtained in performing a seismic survey, representative of earth's subsurface, are processed to yield information relating to the geologic structure and properties of the subsurface earth formations in the area being surveyed. The processed seismic data are processed for display and analysis of potential hydrocarbon content of these subterranean formations. The goal of seismic data processing is to extract from the seismic data as much information as possible regarding the subterranean formations in order to adequately image the geologic subsurface. In order to identify locations in the earth's subsurface where there is a probability for finding petroleum accumulations, large sums of money are expended in gathering, processing, and interpreting seismic data. The process of constructing the reflector surfaces defining the subterranean earth layers of interest from the recorded seismic data provides an image of the earth in depth or time.

The image of the structure of the earth's subsurface is produced in order to enable an interpreter to select locations with the greatest probability of having petroleum accumulations. To verify the presence of petroleum, a well must be drilled. Drilling wells to determine whether petroleum deposits are present or not, is an extremely expensive and time-consuming undertaking. For that reason, there is a continuing need to improve the processing and display of the seismic data, so as to produce an image of the structure of the earth's subsurface that will improve the ability of an interpreter, whether the interpretation is made by a computer or a human, to assess the probability that an accumulation of petroleum exists at a particular location in the earth's subsurface.

The appropriate seismic sources for generating the seismic signal in land seismic surveys may include explosives or vibrators. Marine seismic surveys typically employ a submerged seismic source towed by a seismic vessel and periodically activated to generate an acoustic wavefield. The seismic source generating the wavefield may be of several types, including a small explosive charge, an electric spark or arc, a marine vibrator, and, typically, a gun. The seismic source gun may be a water gun, a vapor gun, and, most typically, an air gun. Typically, a marine seismic source consists not of a single source element, but of a spatially-distributed array of source elements. This arrangement is particularly true for air guns, currently the most common form of marine seismic source.

The appropriate types of seismic sensors typically include particle velocity sensors, particularly in land surveys, and water pressure sensors, particularly in marine surveys. Sometimes particle acceleration sensors or pressure gradient sensors are used in place of or in addition to particle velocity sensors. Particle velocity sensors and water pressure sensors are commonly known in the art as geophones and hydrophones, respectively. Seismic sensors may be deployed by themselves, but are more commonly deployed in sensor arrays. Additionally, pressure sensors and particle velocity sensors are often deployed together in a marine survey, collocated in pairs or pairs of arrays.

In a typical marine seismic survey, a seismic survey vessel travels on the water surface, typically at about 5 knots, and contains seismic acquisition equipment, such as navigation control, seismic source control, seismic sensor control, and recording equipment. The seismic source control equipment causes a seismic source towed in the body of water by the seismic vessel to actuate at selected times. Seismic streamers, also called seismic cables, are elongate cable-like structures towed in the body of water by the seismic survey vessel that tows the seismic source or by another seismic survey vessel. Typically, a plurality of seismic streamers are towed behind a seismic vessel. The seismic streamers contain sensors to detect the reflected wavefields initiated by the seismic source and reflected from reflecting interfaces. Conventionally, the seismic streamers contain pressure sensors such as hydrophones, but seismic streamers are utilized that contain water particle velocity sensors such as geophones or particle acceleration sensors such as accelerometers, in addition to hydrophones. The pressure sensors and particle motion sensors are typically deployed in close proximity, collocated in pairs or pairs of arrays along a seismic cable.

Constructing an image of the earth's subsurface increases in value if the image is constructed quickly enough to be available during the seismic data acquisition. The images can be used to correct errors in previous data acquisition and direct subsequent data acquisition. These benefits are particularly valuable in offshore marine seismic data acquisition, where delays in redoing data acquisition are extremely expensive. The time delay between the acquisition of the offshore data and the construction of the image of the earth's subsurface is due to the time spent in data transmission and data processing, and is called "near-real time". The term "near-real time" also refers to a situation in which the time delay due to transmission and processing is insignificant, so that near-real time approximates real time, the time when acquisition occurs. In the present context, near-real time will refer to a time delay that is short enough to allow timely use of the processed data images during further data acquisition.
GB2432936A discloses a method for 3D pre-stack full waveform inversion of seismic data. A macro P-wave velocity model is generated, including resolution of residual moveout errors, using reflection tomography from a seismic data set. A diffraction response is generated from the macro P-wave velocity model for a given common image gather location, assuming a locally laterally invariant model. The generated diffraction response for the given common image gather location is converted to a migrated reflection response to yield a modeled data set. The modeled data set is compared to the given common image point from the seismic data. The macro P-wave velocity model is updated based on the result of the comparison. The diffraction response generation, the diffraction response conversion, comparison, and update are iterated until the modeled data set converges to the common image gathers.

Thus, a need exists for a method for constructing an image of the earth's subsurface in near-real time during offshore seismic data acquisition. This near-real time imaging further requires a method for determining a high-resolution velocity field in near-real time during offshore seismic data acquisition.

### BRIEF SUMMARY OF THE INVENTION

The invention consists in a method for constructing an image of earth's subsurface from marine seismic data in near-real time, comprising:
acquiring marine seismic data, using a seismic vessel;
transferring the acquired marine seismic data in near-real time to a programmable computer; and
using the programmable computer to perform the following:
   applying an acoustic 3-D full-waveform inversion to the transferred marine seismic data, generating a high-resolution 3-D velocity field in near-real time with a resolution approaching or below a seismic wavelength; and
   using the velocity field to apply migration to the transferred marine seismic data, generating an image of the earth's subsurface in near-real time, wherein the transferring, applying and using steps are carried out in near-real time such that the image of the earth's subsurface is generated during the step of acquiring marine seismic data.

### BRIEF DESCRIPTION OF THE DRAWINGS

The invention and its advantages may be more easily understood by reference to the following detailed description and the attached drawings, in which:

**FIG. 1** is a flowchart illustrating an embodiment of the invention for deriving a high-resolution 3-D velocity field from marine seismic data in near-real time;

**FIG. 2** is a flowchart illustrating an embodiment of the invention for deriving a high-resolution 3-D velocity field from marine seismic data in near-real time with onshore processing; and

**FIG. 3** is a flowchart illustrating an embodiment of the invention for deriving a high-resolution 3-D velocity field from marine seismic data in near-real time with onboard processing.

While the invention will be described in connection with its preferred embodiments, it will be understood that the invention is not limited to these. On the contrary, the invention is intended to cover all alternatives, modifications, and equivalents that may be included within the scope of the invention, as defined by the appended claims.

### DETAILED DESCRIPTION OF THE INVENTION

Imaging the subsurface of the earth from acquired seismic data is one of the primary goals of geophysical prospecting and subsequent seismic processing. Imaging is an inversion problem. The increasing capabilities of computer hardware makes possible a full-waveform inversion.

The process of full-waveform inversion may be utilized to construct a high-resolution (approaching or below a seismic wavelength) velocity field directly from the seismic data with no picking of velocities or horizons. The invention is a method by which such a velocity field may be constructed in near-real time as the data are acquired offshore and transferred to a processing center. Once such a velocity field has been constructed, it will be possible to produce a high-quality image of the earth's subsurface in near-real time from the transferred data.

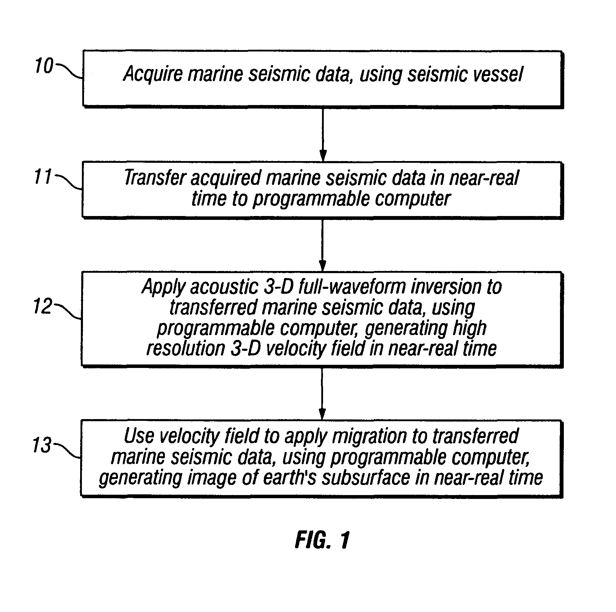

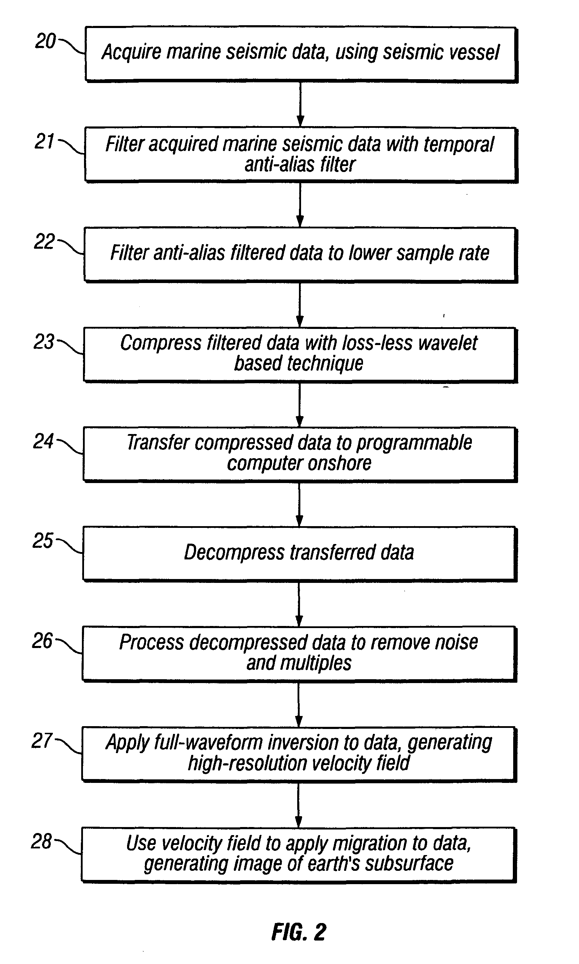

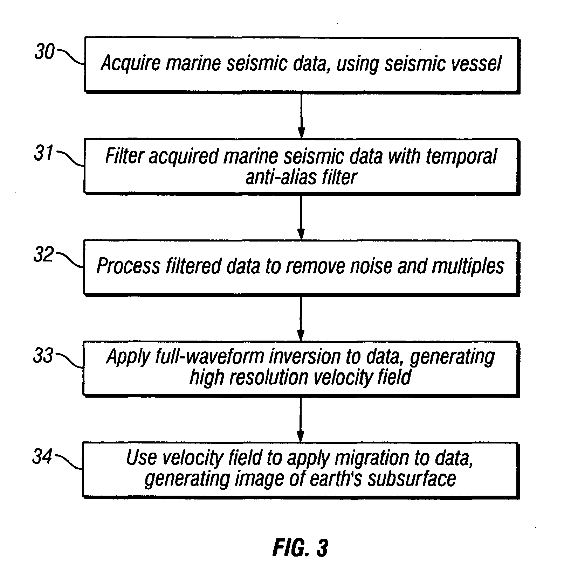

**FIGS. 1-3** are flowcharts illustrating embodiments of the invention for constructing an image of earth's subsurface from marine seismic data in near-real time. FIG. 1 illustrates a general embodiment of the invention. **FIG. 2** illustrates an embodiment of the invention with onshore processing. **FIG. 3** illustrates an embodiment of the invention with onboard processing.

**FIG. 1** is a flowchart illustrating an embodiment of the invention for constructing an image of earth's subsurface from marine seismic data in near-real time.

At block **10**, marine seismic data are acquired, using a seismic vessel. The seismic vessel is used to deploy the seismic receivers. The seismic receivers may be towed through the water in streamers, positioned on the water bottom in ocean bottom cables, or positioned in vertical boreholes. The same seismic vessel or another seismic vessel is employed to tow seismic sources through the water.

At block **11**, the marine seismic data acquired in block **10** are transferred in near-real time to a programmable computer. In one embodiment, detailed below in the discussion regarding the flowchart in **FIG. 2**, the programmable computer is located onshore. In this embodiment, the data transfer is a ship-to-shore transfer to a processing center onshore, where the programmable computer is located. In another embodiment, detailed below in the discussion regarding the flowchart in **FIG. 3**, the programmable computer is located onboard the seismic vessel.

At block **12**, an acoustic 3-D full-waveform inversion is applied to the marine seismic data transferred in block **11**, using the programmable computer from block **11**, generating a high-resolution 3-D velocity field in near-real time.

At block **13**, the velocity field generated in block **12** is used to apply migration to the marine seismic data transferred in block **11**, using the programmable computer from block **11**, generating an image of the earth's subsurface in near-real time.

**FIG. 2** is a flowchart illustrating an embodiment of the invention for constructing an image of earth's subsurface from marine seismic data in near-real time with onshore processing.

At block **20**, marine seismic data are acquired, using a seismic vessel. Typically, the marine seismic data is acquired employing marine seismic sources and marine seismic receivers, as described above in the Background section. The positions of the seismic sources at each source activation and the positions of the seismic receivers at each seismic signal detection are determined by the acquisition system and incorporated into the seismic data.

At block **21**, the marine seismic data acquired in block **20** are filtered with a temporal anti-alias filter. The temporal anti-alias filter is designed to prevent leakage of noise in the sample rate filtering in block **22** below. In addition, the temporal anti-alias filter is designed to optimize the signal-to-noise ratio in the lower frequency portion of the marine seismic data, for the full-waveform inversion in block **27** below.

At block **22,** the data filtered in block **21** are further filtered to a lower sample rate. This lower sample rate is designed to be sufficiently low to facilitate a ship-to-shore data transfer rate in block **24** below that is quick enough to allow the invention to be practiced in near-real time.

At block **23,** the filtered data filtered further in block **22** are compressed, In one embodiment, this compression employs a loss-less wavelet based technique. As above, this compression is to facilitate a quick ship-to-shore data transfer rate in block **24** below.

At block **24,** the filtered data compressed in block **23** are transferred to a processing center onshore. The filtering in block **22** and compression in block **23** speed up the transfer rate to match the seismic data acquisition rate. Thus, in one embodiment, the seismic data from one shot are transferred during the shooting of the subsequent shot.

At block **25**, the compressed data transferred in block **24** are decompressed.

At block **26**, the transferred data decompressed in block **25** are processed to remove noise and multiples.

At block **27,** an acoustic 3-D full-waveform inversion is applied to the decompressed data processed in block **26,** generating a high-resolution 3-D velocity yield. In a particular embodiment, this full-waveform inversion is applied to the low-frequency data filtered in block **21.** In other embodiments, the processing can include, but is not limited to, other velocity-model building methodologies, such as ray-based tomographic inversion methods.

At block **28,** the processed data further processed in block **27** are yet further processed to provide an image of the subsurface. This further processing can include, but is not limited to, beam migration, Kirchhoff migration, and reverse-time migration. Employing the invention described here, the image of the subsurface can be provided in near-real time.

**FIG. 3** is a flowchart illustrating an embodiment of the invention for constructing an image of earth's subsurface from marine seismic data in near-real time with onboard processing.

At block **30,** marine seismic data are acquired, using a seismic vessel. Typically, the marine seismic data are acquired employing marine seismic sources and marine seismic receivers, as described above in the Background section. The positions of the seismic sources at each source activation and the positions of the seismic receivers at each seismic signal detection are determined by the acquisition system and incorporated into the seismic data.

At block **31,** the marine seismic data acquired in block **30** are filtered with a temporal anti-alias filter. The temporal anti-alias filter is designed to optimize the signal-to-noise ratio in the lower frequency portion of the marine seismic data, which is used in block 33 below.

At block **32,** the marine seismic data filtered in block **31** are processed to remove noise and multiples. This and subsequent processing takes place onboard the survey vessel.

At block **33,** an acoustic 3-D full-waveform inversion is applied to the filtered data processed in block **32,** generating a high-resolution 3-D velocity field. In a particular embodiment, this full-waveform inversion is applied to the low-frequency data filtered in block **31.** In other embodiments, the processing can include, but is not limited to, other velocity-model building methodologies, such as ray-based tomographic inversion methods.

At block **34,** the processed data further processed in block **33** are yet further processed to provide an image of the subsurface. This further processing can include, but is not limited to, beam migration, Kirchhoff migration, and reverse-time migration. Employing the invention described here, the image of the subsurface can be provided in near-real time.

In a further embodiment, the velocity field generated in either block **27** of **FIG. 2** or block **33** of **FIG. 3** is employed in a seismic inversion process to estimate rock properties of the earth's subsurface. Seismic inversion transforms seismic reflection data into the rock properties. The seismic inversion can be constrained by other data, such as well data. The near-real time acquisition and high-resolution of the velocity fields improves the results of seismic inversion.

The invention has been discussed above as a method, for illustrative purposes only, but can also be implemented as a system. The system of the invention is preferably implemented by means of computers, in particular digital computers, along with other conventional data processing equipment. Such data processing equipment, well known in the art, will comprise any appropriate combination or network of computer processing equipment, including, but not be limited to, hardware (processors, temporary and permanent storage devices, and any other appropriate computer processing equipment), software (operating systems, application programs, mathematics program libraries, and any other appropriate software), connections (electrical, optical, wireless, or otherwise), and peripherals (input and output devices such as keyboards, pointing devices, and scanners; display devices such as monitors and printers; computer readable storage media such as tapes, disks, and hard drives, and any other appropriate equipment).

In another embodiment, the invention could be implemented as the method described above, specifically carried out using a programmable computer to perform the method. In another embodiment, the invention could be implemented as a computer program stored in a computer readable medium, with the program having logic operable to cause a programmable computer to perform the method described above. In another embodiment, the invention could be implemented as a computer readable medium with a computer program stored on the medium, such that the program has logic operable to cause a programmable computer to perform the method described above.

## Claims

1. A method for constructing an image of earth's subsurface from marine seismic data in near-real time, comprising:
acquiring (10) marine seismic data, using a seismic vessel;
transferring (11) the acquired marine seismic data in near-real time to a programmable computer; and
using the programmable computer to perform the following:
applying (12) an acoustic 3-D full-waveform inversion to the transferred marine seismic data, generating a 3-D velocity field in near-real time with a resolution approaching or below a seismic wavelength; and
using (13) the velocity field to apply migration to the transferred marine seismic data, generating an image of the earth's subsurface in near-real time, wherein the transferring, applying and using steps are carried out in near-real time such that the image of the earth's subsurface is generated during the step of acquiring marine seismic data.

2. The method of claim **1**, wherein the programmable computer is onboard the seismic vessel.

3. The method of claim **2**, wherein the transferring (11) the acquired marine seismic data further comprises:
using the programmable computer to perform the following:
processing (32) the transferred data to remove noise and multiples.

4. The method of claim **1**, wherein the programmable computer is onshore.

5. The method of claim **4**, wherein the acquiring (10) marine seismic data further comprises:
using a programmable computer onboard the seismic vessel to perform the following:
filtering (21) the acquired marine seismic data with a temporal anti-alias filter;
further filtering (22) the filtered data to a lower sample rate; and
compressing (23) the filtered data.

6. The method of claim **5**, wherein the transferring (11, 24) the acquired marine seismic data further comprises:
using the programmable computer onshore to perform the following:
decompressing (25) the transferred data; and
processing (26) the decompressed data to remove noise and multiples.

7. The method of claim **5**, wherein the temporal anti-alias filter is designed to optimize signal-to-noise ratio in a lower frequency portion of the marine seismic data.

8. The method of claim **5**, wherein the temporal anti-alias filter is designed to prevent leakage of noise in the sample rate filtering (22).

9. The method of claim **5**, wherein the compressing (23) employs a loss-less wavelet based technique.

10. The method of claim **1**, further comprising:
using the velocity field in a seismic inversion process to estimate rock properties of the earth's subsurface.

## Patentansprüche

1. Verfahren zum Entwerfen eines Bildes des Untergrundes der Erde aus Meeres-Seismikdaten in Nahe-Echtzeit, das Folgendes umfasst:
das Erfassen (10) von Meeres-Seismikdaten, unter Verwendung eines Seismikschiffes,
das Übertragen (11) der erfassten Meeres-Seismikdaten in Nahe-Echtzeit zu einem programmierbaren Rechner und
das Verwenden des programmierbaren Rechners, um Folgendes auszuführen:
das Anwenden (12) einer akustischen 3D-Vollwellenform-Umkehrung auf die übertragenen Meeres-Seismikdaten, was in Nahe-Echtzeit ein 3D-Geschwindigkeitsfeld mit einer Auflösung, die sich einer seismischen Wellenlänge annähert oder unter derselben liegt, erzeugt, und
das Verwenden (13) des Geschwindigkeitsfeldes, um eine Migration auf die übertragenen Meeres-Seismikdaten anzuwenden, was in Nahe-Echtzeit ein Bild des Untergrundes der Erde erzeugt, wobei die Schritte des Übertragens, Anwendens und Verwendens in Nahe-Echtzeit ausgeführt werden derart, dass das Bild des Untergrundes der Erde während des Schrittes des Erfassens der Meeres-Seismikdaten erzeugt wird.

2. Verfahren nach Anspruch 1, wobei sich der programmierbare Rechner an Bord des Seismikschiffes befindet.

3. Verfahren nach Anspruch 2, wobei das Übertragen (11) der erfassten Meeres-Seismikdaten ferner Folgendes umfasst:
das Verwenden des programmierbaren Rechners, um Folgendes auszuführen:
das Verarbeiten (32) der übertragenen Daten, um Rauschen und Vielfache zu entfernen.

4. Verfahren nach Anspruch 1, wobei sich der programmierbare Rechner an Land befindet.

5. Verfahren nach Anspruch 4, wobei das Erfassen (10) von Meeres-Seismikdaten ferner Folgendes umfasst:
das Verwenden eines programmierbaren Rechners an Bord des Seismikschiffes, um Folgendes auszuführen:
das Filtern (21) der erfassten Meeres-Seismikdaten mit einem zeitlichen Anti-Alias-Filter,
das weitere Filtern (22) der gefilterten Daten auf eine niedrigere Abtastgeschwindigkeit und
das Komprimieren (23) der gefilterten Daten.

6. Verfahren nach Anspruch 5, wobei das Übertragen (11, 24) der erfassten Meeres-Seismikdaten ferner Folgendes umfasst:
das Verwenden des programmierbaren Rechners an Land, um Folgendes auszuführen:
das Dekomprimieren (25) der übertragenen Daten und
das Verarbeiten (26) der dekomprimierten Daten, um Rauschen und Vielfache zu entfernen.

7. Verfahren nach Anspruch 5, wobei das zeitliche Anti-Alias-Filter dafür ausgelegt ist, den Signal-Rausch-Abstand in einem unteren Frequenzanteil der Meeres-Seismikdaten zu optimieren.

8. Verfahren nach Anspruch 5, wobei das zeitliche Anti-Alias-Filter dafür ausgelegt ist, einen Rauschverlust beim Abtastgeschwindigkeitsfiltern (22) zu verhindern.

9. Verfahren nach Anspruch 5, wobei das Komprimieren (23) eine verlustlose auf Wavelets beruhende Technik einsetzt.

10. Verfahren nach Anspruch 1, das ferner Folgendes umfasst:
das Verwenden des Geschwindigkeitsfeldes in einem seismischen Umkehrverfahren, um Gesteinseigenschaften des Untergrundes der Erde abzuschätzen.

## Revendications

1. Procédé de construction d'une image d'une subsurface de la terre à partir de données sismiques marines en temps quasi réel, comprenant :
l'acquisition (10) de données sismiques marines, à l'aide d'un vaisseau sismique ;
le transfert (11) des données sismiques marines acquises en temps quasi réel à un ordinateur programmable ; et
l'utilisation de l'ordinateur programmable pour réaliser ce qui suit :
l'application (12) d'une inversion de forme d'onde complète 3D acoustique aux données sismiques marines transférées, générant un champ de vitesse 3D en temps quasi réel avec une résolution approchant ou en dessous d'une longueur d'onde sismique ; et
l'utilisation (13) du champ de vitesse pour appliquer une migration aux données sismiques marines transférées, générant une image de la subsurface de la terre en temps quasi réel, les étapes de transfert, d'application et d'utilisation étant réalisées en temps quasi réel de telle sorte que l'image de la subsurface de la terre est générée pendant l'étape d'acquisition des données sismiques marines.

2. Procédé selon la revendication 1, dans lequel l'ordinateur programmable se trouve à bord du vaisseau sismique.

3. Procédé selon la revendication 2, dans lequel le transfert (11) des données sismiques marines acquises comprend en outre :
l'utilisation de l'ordinateur programmable pour réaliser ce qui suit :
le traitement (32) des données transférées afin d'éliminer du bruit et des multiples.

4. Procédé selon la revendication 1, dans lequel l'ordinateur programmable se trouve à terre.

5. Procédé selon la revendication 4, dans lequel l'acquisition (10) de données sismiques marines comprend en outre :
l'utilisation d'un ordinateur programmable à bord du vaisseau sismique pour réaliser ce qui suit :
le filtrage (21) des données sismiques marines acquises avec un filtre anti-repliage temporel ;
le filtrage à nouveau (22) des données filtrées à un taux d'échantillonnage plus bas ; et
la compression (23) des données filtrées.

6. Procédé selon la revendication 5, dans lequel le transfert (11, 24) des données sismiques marines acquises comprend en outre :
l'utilisation de l'ordinateur programmable à terre afin de réaliser ce qui suit :
la décompression (25) des données transférées ; et
le traitement (26) des données décompressées afin d'éliminer du bruit et des multiples.

7. Procédé selon la revendication 5, dans lequel le filtre anti-repliage temporel est conçu pour optimiser le rapport signal sur bruit dans une portion de fréquence plus basse des données sismiques marines.

8. Procédé selon la revendication 5, dans lequel le filtre anti-repliage temporel est conçu pour éviter une fuite de bruit dans le filtrage de taux d'échantillonnage (22).

9. Procédé selon la revendication 5, dans lequel la compression (23) emploie une technique à base d'ondelette sans perte.

10. Procédé selon la revendication 1, comprenant en outre :
l'utilisation du champ de vitesse dans un procédé d'inversion sismique afin d'estimer des propriétés de la roche de la subsurface de la terre.
